# EUROPEAN PATENT SPECIFICATION

(11) **EP 2 464 501 B1**
(45) Date of publication and mention of the grant of the patent: **17.07.2013**
(21) Application number: 10741918.6
(22) Date of filing: 03.08.2010
(51) Int. Cl.: B29C 45/00, B29C 45/14, B29D 35/14, B29C 33/00, B29C 33/10, B29C 45/34

(54) **INJECTION MOULD WITH COMPENSATION CHAMBER FOR MOULDING TPU AND OTHER THERMOPLASTIC MATERIALS ON RUBBER TREAD**
SPRITZGUSSFORM MIT AUSGLEICHSKAMMER ZUR FORMUNG VON TPU UND ANDEREN THERMOPLASTISCHEN MATERIALIEN AUF EINEM GUMMIPROFIL
MOULE D INJECTION À CHAMBRE DE COMPENSATION PERMETTANT LE MOULAGE DU TPU ET D AUTRES MATÉRIAUX THERMOPLASTIQUES SUR UNE SEMELLE DE CAOUTCHOUC

(30) Priority: 11.08.2009 IT AN20090047
(43) Date of publication of application: 20.06.2012
(73) Proprietor: EUROSUOLE S.P.A., 62012 Civitanova Marche MC (IT)
(72) Inventor: ERCOLI, Germano, 62012 Civitanova Marche (MC) (IT)
(74) Representative: Statti, Francesco
(86) International application number: PCT/EP2010/004742
(87) International publication number: WO 2011/018171

(56) References cited:
- WO-A2-2008/011366
- FR-A1- 2 548 950
- FR-A3- 2 152 481

## Description

### Field of Invention

The present invention relates to the footwear sector and more specifically concerns a mould provided with compensation chambers for metering the TPU or other thermoplastic materials put in during moulding on a shoe bottom or rubber tread.

### Background of Invention

At present, in the footwear sector, injection moulding of TPU or other thermoplastic materials on rubber soles or treads poses difficulties that can be found in the normal tolerances of the thickness and dimensions of the rubber bottom or tread and in the metering of TPU or other materials during injection. It follows that current shoe soles with rubber tread on which TPU or other materials are injection moulded present the defect of not having a uniform covering of TPU or other materials around the whole perimeter of the rubber tread if an insufficient amount of them has been metered or, vice versa, being deformed due to accumulation of the injected material only in some parts of the perimeter of the rubber tread, if an excessive amount of them has been put in during moulding.

There is the following background for the present invention: FR 2 152 481 A3 of 27 April 1973; WO 2008/011366 A2 of 24 January 2008; FR 2 548 950 A1 of 18 January 1985.

None of the cited documents disclosed the presence of one or more compensation chambers in the inlet channel for distributing the material along the whole perimeter of the rubber bottom or tread.

Particularly, the patent FR 2 152 481 A3 discloses an injection mould suitable for the moulding of thermostatic material or TPU on a rubber bottom or thread of a shoe.

Substantially, the present invention differs from what disclosed by FR 2 152 481 A3 in the presence of one or more compensation chambers situated in the inlet channel, which are able to uniformly distribute the material along the inlet channel of the mould and therefore along the whole perimeter of the rubber bottom or tread of the shoe while automatically absorbing the possible volume differences of the rubber bottom or tread and/or automatically metering the amount of injected thermoplastic material or TPU.

### Disclosure of Invention

It is an object of the present invention to make a sole mould for footwear provided with a rubber bottom or tread on which to injection mould TPU or other thermoplastic materials that is able to automatically meter the amount of the said materials put in by injection in order to guarantee that they uniformly cover the whole perimeter of the rubber bottom or tread.

It is another object of the present invention to obtain shoe soles with rubber bottom or tread on which TPU or other thermoplastic materials are injection moulded without the defects that characterize similar soles currently moulded with traditional moulds.

It is another object of the present invention to guarantee better functionality of shoe soles with rubber bottom or tread on which TPU or other thermoplastic materials are injection moulded.

It is another object of the present invention to reduce production costs with the elimination of waste of the soles with rubber bottom or tread on which TPU or other thermoplastic materials are injection moulded with the current moulds.

It is still another object of the present invention to obtain shoe soles with rubber bottom or tread on which TPU or other thermoplastic materials are injection moulded with technical characteristics that are better than those of similar shoe soles obtained with the moulds that are currently on the market.

These and other objects are obtained by the invention that is the subject of the present application that concerns a sole mould for footwear with rubber bottom or tread on which TPU or other thermoplastic materials are injection moulded characterized by one or more compensation chambers that, placed in the area opposite the area where the injected TPU or thermoplastic material is put in, are able to automatically absorb all the possible volume differences caused by expansion of the rubber tread and to automatically compensate the amount of injected thermoplastic material so as to ensure its uniform distribution around the whole perimeter of the rubber bottom or tread of the shoe.

### Brief description of drawings

Further characteristics and advantages of the invention will become more readily apparent from the description of a preferred, but not exclusive, embodiment of the present application, illustrated by way of non-limiting example in the drawing units, in which:

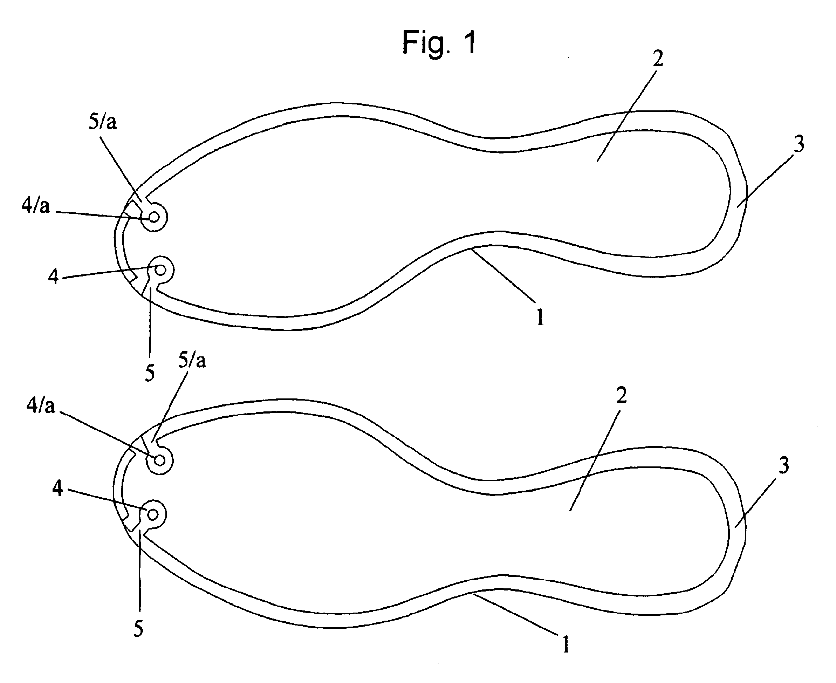

Fig. 1 is a top view of the mould that is the subject of the present application for the production of a pair of shoe soles with rubber bottom or tread;

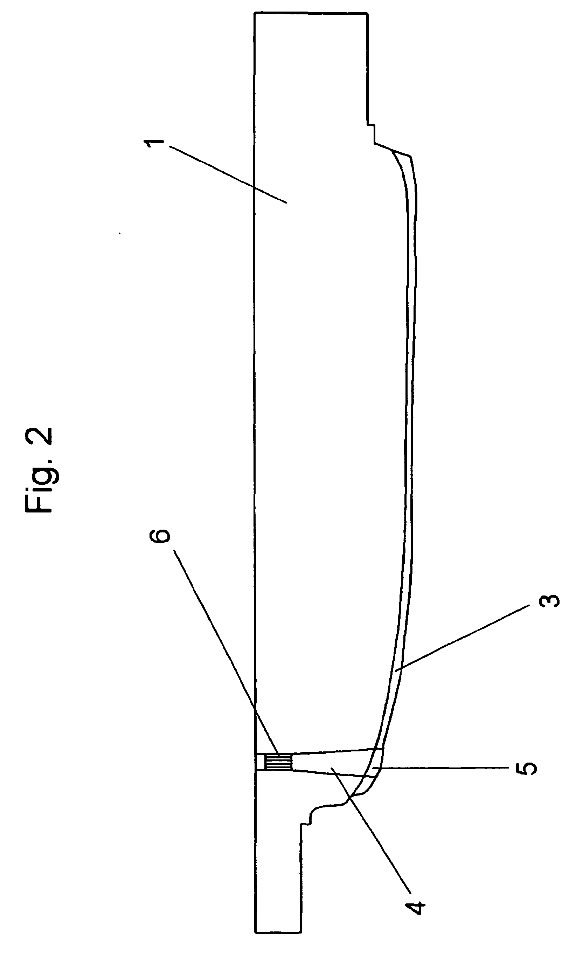

Fig. 2 is a side section view showing a compensation chamber of the mould;

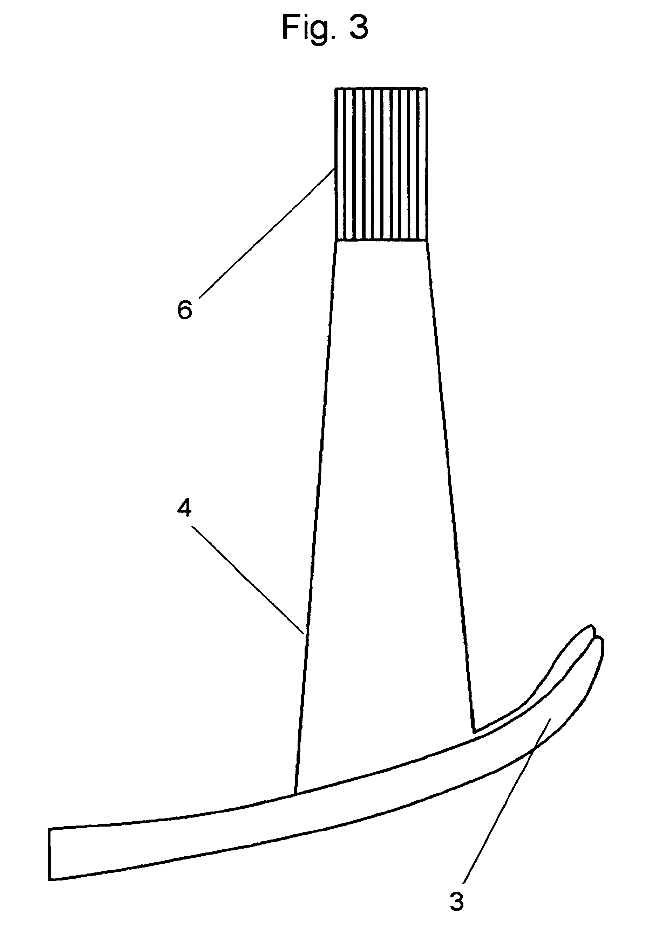

Fig. 3 is a side section view of one of the compensation chambers of the mould with the vent positioned on it.

### Detailed description of Invention

The invention that is the subject of the present application is a mould (1) in the centre of which is moulded beforehand the rubber bottom or tread (2) of the sole on which the TPU or other thermoplastic material must then be injected through an inlet channel (3), already known in the state of the art however, which will deposit the said second material, once it has been put in and moulded, along the sides of the rubber bottom or tread (2).

The amount of injected thermoplastic material or TPU will be uniformly moulded along the whole length of the inlet channel (3) of the mould (1) thanks to one or more compensation chambers (4) and (4/a) preferably situated in the area opposite the area where the injected thermoplastic material or TPU is put in so as to absorb the volume differences of the rubber bottom or tread (2) and/or the greater or lesser amount of injected thermoplastic material or TPU and automatically ensure uniform distribution of the said material along the whole of the inlet channel (3) of the mould (1) and therefore along the whole perimeter of the rubber bottom or tread (2) of the shoe.

The inlet channel (3) of the mould (1) and the compensation chambers (4) and (4/a) are reciprocally connected by an opening (5) and (5/a) of calibrated width so as to allow easy outflow of air from the inlet channel (3) pushed by the melted thermoplastic material or TPU and a slowing of this melted material in order not to completely fill the compensation chambers (4) and (4/a).

Above the compensation chambers (4) and (4/a), there is a vent (6) with the dual function of allowing the escape of the air and gases respectively pushed and released by the melted thermoplastic material and preventing the escape of the melted material due to a possible excess amount being put in.

## Claims

1. Injection mould with compensation chamber for the moulding of TPU or other thermoplastic materials on rubber bottom or tread in order to allow uniform distribution around the whole perimeter of the rubber bottom or tread of the shoe **characterized by** one or more compensation chambers (4, 4/a) which are situated in the inlet channel (3) of the injected material and preferably in the area opposite the area where the TPU or thermoplastic material is put in, and which are able to uniformly distribute the said material along the inlet channel (3) of the mould (1) and therefore along the whole perimeter of the rubber bottom or tread (2) of the shoe while automatically absorbing the possible volume differences of the rubber bottom or tread (2) and/or automatically metering the amount of injected thermoplastic material or TPU.

2. Injection mould with compensation chamber according to claim 1 wherein one or more compensation chambers (4, 4/a), preferably two, are situated on the inlet channel (3) of the melted thermoplastic material, preferably in the area opposite the area where the injected TPU or thermoplastic material is put in so as to automatically allow uniform distribution of the said injected material along the inlet channel (3) of the mould (1) and therefore along the whole of the perimeter of the rubber bottom or tread (2) of the shoe.

3. Injection mould with compensation chamber according to claims 1 and 2 wherein the compensation chambers (4, 4/a) and the inlet channel (3) are connected by an opening (5, 5/a) of calibrated width so as to allow easy outflow of air from the inlet channel (3) pushed by the melted thermoplastic material or TPU and a slowing of this melted material in order not to completely fill the compensation chambers (4, 4/a).

4. Injection mould with compensation chamber according to claims 1, 2 and 3 wherein the compensation chambers (4, 4/a) are provided with a vent (6) situated at the top of them.

5. Injection mould with compensation chamber according to claim 4 wherein the vent (6) of the compensation chambers (4, 4/a) has the dual function of allowing the escape of the gases released by the melted thermoplastic material and preventing the escape of the thermoplastic material due to a possible excess amount being put in.

## Patentansprüche

1. Spritzgussform mit Ausgleichskammer zur Formung von TPU und anderen thermoplastischen Materialien auf einem Gummiprofil für gleichmäßige Verteilung über den gesamten Umfang des Gummiprofils des Schuhs, **gekennzeichnet durch** eine oder mehrere Ausgleichskammern (4, 4/a) im Einlasskanal (3) des Spritzgussmaterials und vorzugsweise in dem Bereich, der jenem Bereich gegenüberliegt, in dem sich das TPU oder thermoplastische Material befindet. Die Ausgleichskammern sollen dabei das Material gleichmäßig über den Einlasskanal (3) der Form (1) und somit über den gesamten Umfang des Gummiprofils (2) des Schuhs verteilen können, wobei sie automatisch die möglichen Volumenunterschiede des Gummiprofils (2) ausgleichen und/oder automatisch die Menge des eingespritzten thermoplastischen Materials oder TPU dosieren.

2. Spritzgussform mit Ausgleichskammer nach Patentanspruch 1, wobei sich eine oder mehrere Ausgleichskammern (4, 4/a), vorzugsweise zwei, im Einlasskanal (3) des geschmolzenen thermoplastischen Materials befinden, vorzugsweise in dem Bereich, der jenem Bereich gegenüberliegt, in dem sich das TPU oder thermoplastische Material befindet, so dass automatisch eine gleichförmige Verteilung des Spritzgussmaterials über den Einlasskanal (3) der Form (1) und somit über den gesamten Umfang des Gummiprofils (2) des Schuhs möglich ist.

3. Spritzgussform mit Ausgleichskammer nach Patentansprüchen 1 und 2, wobei die Ausgleichskammern (4, 4/a) und der Einlasskanal (3) durch eine Öffnung (5, 5/a) mit einer eichfähigen Breite miteinander verbunden sind, so dass ein Luftauslass aus dem Einlasskanal (3) möglich wird, der von dem geschmolzenen thermoplastischen Material oder TPU vorangeschoben wird, und eine Verlangsamung des geschmolzenen Materials, damit die Ausgleichskammern (4, 4/a) nicht vollständig gefüllt werden.

4. Spritzgussform mit Ausgleichskammer nach Patentansprüchen 1, 2 und 3, wobei die Ausgleichskammern (4, 4/a) mit einer Entlüftung (6) an der oberen Seite versehen sind.

5. Spritzgussform mit Ausgleichskammer nach Patentanspruch 4, wobei die Entlüftung (6) der Ausgleichskammern (4, 4/a) die zweifache Aufgabe hat, die vom geschmolzenen thermoplastischen Material freigesetzten Gase entweichen zu lassen und das thermoplastische Material daran zu hindern, wegen eines möglichen Überschusses beim Einsetzen der Menge zu entweichen.

## Revendications

1. Moule d'injection à chambre de compensation permettant le moulage du TPU et d'autres matériaux thermoplastiques sur une semelle en caoutchouc pour permettre une distribution uniforme autour de la totalité du pourtour de la semelle en caoutchouc de la chaussure, **caractérisé par** une ou plusieurs chambre(s) de compensation (4, 4/a) située(s) dans le canal d'entrée (3) du matériau injecté et, de préférence, dans la zone opposée à la zone où le TPU ou le matériau thermoplastique est introduit, et qui est en mesure de distribuer uniformément ce matériau le long du canal d'entrée (3) du moule (1) et, par conséquent, le long de l'intégralité du périmètre de la semelle en caoutchouc (2) de la chaussure, tout en absorbant automatiquement les différences de volume possibles de la semelle en caoutchouc (2) et/ou de doser automatiquement la quantité de matériau thermoplastique ou de TPU injectée.

2. Moule d'injection avec chambre de compensation conformément à la revendication 1 dans lequel une ou plusieurs chambre(s) de compensation (4, 4/a), de préférence deux, sont situées sur le canal d'entrée (3) du matériau thermoplastique fondu, de préférence sur la zone opposée à celle où le TPU ou le matériau thermoplastique injecté est introduit de manière à permettre automatiquement la distribution uniforme de ce matériau injecté le long du canal d'entrée (3) du moule (1), donc le long de l'intégralité du périmètre de la semelle en caoutchouc (2) de la chaussure.

3. Moule d'injection avec chambre de compensation conformément aux revendications 1 et 2 dans lequel les chambres de compensation (4, 4/a) et le canal d'entrée (3) sont reliés par une ouverture (5, 5/a) dont la largueur est calibrée de manière à faciliter l'évacuation d'air du canal d'entrée (3) poussé par le matériau thermoplastique ou le TPU fondu et à ralentir ce matériau fondu afin de ne pas remplir entièrement les chambres de compensation (4, 4/a).

4. Moule d'injection avec chambre de compensation conformément aux revendications 1, 2 et 3 dans lequel les chambres de compensation (4, 4/a) sont équipées d'un évent (6) situé sur le dessus de celles-ci.

5. Moule d'injection avec chambre de compensation conformément à la revendication 4 dans laquelle l'évent (6) des chambres de compensation (4, 4/a) a la double fonction de permettre l'évacuation des gaz dégagés par le matériau thermoplastique fondu et d'empêcher que le matériau thermoplastique puisse s'échapper suite à l'introduction éventuelle d'une quantité excédentaire.
